# FASCICULE DE BREVET EUROPEEN

(11) **EP 0 712 260 B1**
(45) Date de publication et mention de la délivrance du brevet: **27.05.1998**
(21) Numéro de dépôt: 95402477.4
(22) Date de dépôt: 07.11.1995
(51) Int. Cl.: H04Q 11/04

(54) **Procédé d'insertion de cellules dans un flux de type ATM et dispositif de mise en oeuvre**
Verfahren zur Einfügung von Zellen in einen ATM-Strom und Anlage zur Durchführung des Verfahrens
Method for inserting cells in an ATM-stream and apparatus for implementing the method

(30) Priorité: 08.11.1994 FR 9413403
(43) Date de publication de la demande: 15.05.1996
(73) Titulaire: FRANCE TELECOM, 75015 Paris (FR)
(72) Inventeur: Tremel, Jean-Yves, Cabinet Ballot-Schmit, F-94230 Cachan (FR); Mathieu, Bertrand, Cabinet Ballot-Schmit, F-94230 Cachan (FR)
(74) Mandataire: Schmit, Christian Norbert Marie

(56) Documents cités:
- PATENT ABSTRACTS OF JAPAN vol. 15 no. 236 (E-1078) ,18 Juin 1991 & JP-A-03 071749 (NEC CORP) 27 Mars 1991,
- IEEE LCS THE MAGAZINE OF LIGHTWAVE COMMUNICATION SYSTEMS, vol. 2, no. 3, Août 1991 NEW YORK, pages 31-36, XP 000225887 H. BAUCH 'Transmission Systems for the BISDN'
- COMMUNICATIONS - RISING TO THE HEIGHTS, DENVER, JUNE 23 - 26, 1991, vol. 1 OF 3, 23 Juin 1991 INSTITUTE OF ELECTRICAL AND ELECTRONICS ENGINEERS, pages 264-268, XP 000269414 NAOSHI SATO ET AL 'PERFORMANCE MONITORING METHOD USING OAM CELLS IN B-ISDN'

## Description

La présente invention a pour objet un procédé d'insertion de cellules dans un flux de cellules de type ATM ("Asynchronous Transfer Mode") en vue par exemple de mesurer la qualité d'un réseau ou d'un équipement.

On rappelle que la transmission suivant le standard ATM se fait par transfert de blocs d'informations de longueur constante. La quantité élémentaire d'informations transmises est de 48 octets. Le bloc transmis en ATM est dénommé cellule et est identifié par une étiquette de 5 octets appelée en-tête. La longueur totale d'une cellule est donc de 53 octets.

La norme ATM permet un multiplexage temporel à plusieurs niveaux en organisant les flux de cellules en conduit virtuel VP ("Virtual Path") et voie virtuelle VC ("Virtual Channel").

Ainsi toutes les cellules ATM peuvent être affectées à un conduit virtuel VP parmi 4096 et à une voie virtuelle VC parmi 65536. Les numéros de conduit et de la voie virtuelle de la cellule sont contenus dans des champs respectivement de 12 et 16 bits de l'en-tête. Ainsi, un en-tête de 5 octets dont les bits sont numérotés de 0 à 7 contient le numéro de conduit virtuel VPI défini sur 12 bits, le numéro de voie virtuelle VCI défini sur 16 bits, un indicateur de type de cellules PT ("Payload Type") défini sur trois bits, un indicateur de priorité CLP ("Cell Loss Priority") défini sur 1 bit ainsi qu'un code correcteur d'erreurs HEC défini sur 8 bits et portant sur les 4 octets précédents.

Un réseau ATM permet la transmission d'informations numériques ayant des débits variés pouvant être très importants, pouvant en effet aller jusqu'à 155 Mbit/s.

Selon le standard ATM, il est prévu d'insérer des flux de maintenance pour la couche ATM. Ces flux sont les flux F4 et F5.

La vérification d'un conduit virtuel s'effectue par le flux F4, à l'aide de cellules OAM envoyées sur une voie virtuelle réservée (VCI=4 pour un flux F4 de bout en bout, VCI=3 pour un flux F4 de sous-réseau).

Par contre, les flux de maintenance relatifs à une voie virtuelle donnée (flux F5) empruntent le même chemin que les cellules utiles. On les distingue par un codage particulier du champ PT.

L'insertion d'un flux de cellules caractéristiques qu'il s'agisse de flux de maintenance ou autre, peut conduire à réduire le débit offert aux usagers. En effet, l'insertion est faite de manière forcée au détriment des débits offerts aux usagers.

On pourra se reporter à titre d'exemple au document IEEE LCS THE MAGAZINE OF LIGHTWAVE COMMUNICATION SYSTEMS, vol. 2, no. 3, Août 1991 NEW YORK, pages 31-36, H. BAUCH Transmission Systems for the BISDN, dans lequel on décrit l'insertion de cellules OAM dans un flux incident.

La présente invention a pour objet un procédé d'insertion de cellules caractéristiques permettant d'effectuer l'insertion en temps réel tout en ne réduisant pas le débit des flux offerts aux usagers quelque soient ces débits.

L'invention a également pour objet un dispositif de mise en oeuvre du procédé.

Ainsi, selon l'invention, le procédé d'insertion est principalement caractérisé en ce que chaque fois qu'une insertion de cellule caractéristique est faite, une cellule vide du flux incident est supprimée, la suppression ne se faisant pas nécessairement juste après l'insertion, le nombre de cellules vides à supprimer étant comptabilisé.

A cette fin, le procédé comporte les étapes suivantes :
- effectuer un pré-traitement sur le flux entrant pour d'une part, former un message caractérisant chaque cellule reçue et donnant notamment une information sur le type de cellule et d'autre part, sélectionner les cellules usagers et les stocker chacune le temps du traitement qui va suivre,
- effectuer un traitement à partir des messages formés pour générer une cellule caractéristique, l'émettre à chaque fois qu'un nombre déterminé de cellules usagers a été émis et supprimer une cellule vide, sinon émettre une cellule usager en attente ou générer une cellule vide.

Les traitements effectués en temps réel selon le procédé permettent de réaliser des insertions de cellules de façon indépendante du débit du flux entrant et sans perturber ce débit.

La présente invention sera mieux comprise à l'aide de la description qui va suivre et qui est donnée à tire illustratif et non limitatif et en regard des dessins sur lesquels :
- la figure 1, représente le schéma de principe du dispositif conforme à l'invention,
- la figure 2, illustre les mouvements des messages dans la pile 203,
- les figures 3 et 4, illustrent les flux entrants et sortants selon deux modes de réalisation,
- les figures 5, 6 et 7, illustrent des schémas relatifs à plusieurs implantations possibles.

Selon l'invention, le dispositif comporte un circuit de pré-traitement 100 du flux incident de cellules S0.

Ce circuit permet de former en temps réel un message caractéristique ME pour chaque cellule entrante. Ce message comporte notamment une indication sur l'état ou plus précisément sur le type de cellule afin de savoir s'il s'agit d'une cellule vide ou d'une cellule usager ou d'un autre type prédéterminé de cellule. Dans la suite on qualifiera l'ensemble des cellules usagers et des cellules non-usagers par cellules non vides. On entend par cellules non-usagers les cellules dont le VCI est inférieur à 15 et les cellules caractéristiques.

Le circuit de pré-traitement permet en outre de sélectionner dans le flux entrant les cellules non vides pour les stocker au fur et à mesure.

Le dispositif comporte en outre un circuit de traitement 200 qui, à partir des messages stockés, permet de savoir à quel moment il faut générer une cellule caractéristique dans le flux de sortie. Ainsi, selon l'invention le circuit permet de générer la cellule caractéristique et de supprimer une cellule vide du flux entrant à chaque fois qu'un nombre X déterminé de cellules usagers à été émis.

Lorsque ce nombre X n'est pas atteint, le circuit permet d'émettre successivement les cellules du flux entrant qu'il s'agisse de cellules usagers ou de cellules vides. Dans le cas où il faut émettre une cellule vide, le circuit génère cette cellule puisque, comme on le verra dans la suite, on ne stocke pas les cellules vides entrantes.

Le circuit de pré-traitement comporte un circuit 101 de détection de cellules usagers et de formation de messages pour chaque cellule. Ce circuit comporte en outre une mémoire de traduction 102 et un circuit tampon du type FIFO. Le circuit 101 permet d'une part, de détecter les cellules usagers à partir des en-têtes de cellules pour les stocker dans la mémoire tampon 103 et, d'autre part, d'adresser la mémoire de traduction 102.

Les cellules du flux entrant sont utilisées par le circuit 101 pour adresser la mémoire de traduction 102 qui délivre pour chacune un code pré-enregistré. Le circuit 101 forme au moyen de ce code et des informations de la cellule, un message comprenant un premier mot M1 de codage du numéro de conduit virtuel VPI et un deuxième mot M2 pour indiquer le type de cellule. Un troisième mot M3 contient des bits de parité BIP16 calculés sur les données contenues dans les cellules. Le mot M2, indiquant le type de cellule, permet de savoir si la cellule reçue est une cellule vide ou une cellule usager ou une cellule non usager, à savoir par exemple une cellule de maintenance ou une cellule usager avec un VC < 15.

Les informations S3 circulant entre le circuit 101 et le circuit de traitement 201 du bloc 200 correspondent aux messages formés par le circuit 101 pour chaque cellule reçue. Le circuit de traitement 200 comporte un circuit 201 de génération des cellules caractéristiques recevant les informations S3 du circuit de formation de messages. Ce circuit de traitement 200 comporte en outre un circuit d'insertion de cellules apte à insérer une cellule caractéristique dans le flux de cellules usagers S5, obtenue par lecture de la mémoire tampon 103 lorsqu'il en reçoit l'ordre du circuit de génération 201.

A titre d'exemple, on va prendre le cas de l'insertion de cellules de maintenance de supervision de qualité.

On va également prendre le cas où l'insertion se fait après la X^{ième} cellule d'un conduit virtuel VPI. La cellule traitée par le circuit 201 est la cellule relative au message qui se trouve en bas de la pile 203.

Si la valeur du message en bas de la pile 203 correspond à une cellule appartenant à un conduit virtuel (parmi les 4096) sur lequel on ne veut pas procéder à une insertion de flux ou à une cellule non-usager, alors le circuit émet sur S4 à destination du circuit 202 un signal de commande de lecture de la mémoire tampon 103 et d'émission sur S6 de cette cellule et d'attente d'une cellule dont le message formé par le circuit 101 sera placé en haut de la pile 203.

Si la valeur du message placé en bas de la pile correspond à une cellule usager d'un VP sur lequel on veut insérer un flux caractéristique, alors le circuit incrémente de 1 le compteur 204 de cellules usagers recues sur ce conduit virtuel et effectue les traitements nécessaires relatifs aux cellules usagers et à la cellule de maintenance. Ce traitement consiste d'une part, pour chaque cellule de chaque conduit, à calculer le contenu du champ BIP16 en faisant un OU-exclusif entre le BIP16 des précédentes cellules et le BIP16 de la cellule en cours et d'autre part, à déterminer le contenu du champ TUC ("Total User Cell"). Ce contenu est déterminé par la valeur du compteur de cellules.

De la même façon que dans le cas précédent, le circuit 201 envoie vers le circuit 202, un signal de commande de lecture de la mémoire 103, d'émission sur S6 de la cellule usager et d'attente d'une cellule.

Si la valeur du message placé en bas de la pile correspond à la X^{ième} cellule usager, le circuit 201 émet sur S4 l'ordre de lire dans la pile 103 la cellule correspondante et de l'émettre sur S6. Le traitement effectué est le même que celui qui vient d'être décrit ci-dessus pour une cellule usager (par exemple, attente du prochain message S3).

De plus, le circuit 201 envoie un ordre de génération d'une cellule de maintenance au circuit 202. Il calcule le BIP16 de cette cellule et l'envoie au circuit 202 ainsi que son VPI, il envoie également le contenu MSN du compteur 205 et le nombre total de cellules usagers TUC donné par le compteur 204. Le contenu MSN représente le numéro de la cellule de maintenance émise. Le compteur 205 est incrémenté de 1 à chaque cellule de maintenance émise.

Le circuit 202 émettra alors la cellule usager, puis la cellule de maintenance F4 [VP IO 00 40 20 MSN TUC BIP16 FF FF FF 6A 6A ...... 6A CRCIO], puisque l'on a choisi dans cet exemple d'émettre la cellule de maintenance de supervision de qualité juste après la X^{ième} cellule usager.

De plus, le circuit 201 incrémente le compteur de cellules de maintenance émises 206. C'est ce compteur qui va permettre de savoir combien de cellules vides devront être supprimées.

Si la valeur du message placé en bas de la pile 203 correspond à une cellule vide, le circuit 201 envoie un ordre sur S4 de générer une cellule vide dans le cas où le compteur 206 est nul et attend le message S3. Dans le cas où ce compteur n'est pas nul, alors la cellule vide n'est pas émise, le compteur 206 est décrémenté de un et la cellule suivante est immédiatement traitée.

Le dispositif qui vient d'être décrit permet de mettre en oeuvre le procédé conforme à l'invention. Selon ce procédé, on insère des cellules caractéristiques dans un flux incident de cellules.

Comme cela a été dit, on entend par cellules caractéristiques, des cellules de maintenance telles que définies par la norme ATM - pour le flux F4 ou F5 ou des cellules spécifiques (contenant des données spécifiques).

L'insertion de flux de maintenance peut être réalisée sur un ou plusieurs conduits ATM et même sur tous les conduits conformément au procédé. En outre, l'insertion est réalisée de façon indépendante du débit usager.

Selon le procédé on insère une cellule caractéristique toutes les X cellules usagers d'un même conduit virtuel. Le nombre X peut être fixé une fois pour toutes ou variable selon l'application choisie.

Cette insertion est réalisée conformément au procédé en conservant le débit du flux usager. A cette fin, lorsque X cellules d'un même conduit ont été émises, on va insérer une cellule caractéristique et supprimer une cellule vide. On attendra donc l'arrivée d'une cellule vide pour la supprimer après avoir inséré une cellule caractéristique.

Bien entendu, si aucune cellule vide ne se présente et que le nombre X de cellules est dépassé, on insère la cellule caractéristique et on comptabilise le nombre de cellules vides à supprimer. La cellule caractéristique peut être émise à tout moment dans l'intervalle qui sépare la cellule X et la cellule (X+1).

On va maintenant détailler le fonctionnement du dispositif. Le flux S0 correspond au flux de cellules ATM. Les cellules reçues sont détectées par leur en-tête, les cellules ayant un en-tête erroné étant éliminées. Les en-têtes erronés sont détectés de façon connue grâce au contenu du champ d'en-tête HEC. La détection des cellules non vides est réalisée classiquement par comparaison avec le contenu fixé d'un en-tête de cellule vide.

Le flux S1 correspond aux cellules non vides détectées. Ces cellules sont mises en attente au fur et à mesure de leur arrivée dans une mémoire tampon 103. La durée de mise en attente correspond en pratique à la durée de traitement de la cellule précédente par le circuit 201. Tout en détectant les cellules usagers, le circuit 101 permet en outre de former le message ME pour chaque cellule du flux. Le premier mot M1 correspond de manière préférée au codage sur 12 bits de l'indicateur de conduit virtuel VPI et de l'indicateur de voie virtuelle auxquels appartient la cellule. Le deuxième mot M2 est l'indicateur du type (ou de l'état) de la cellule.

Comme cela a été décrit, ce mot M2 permet d'indiquer si la cellule reçue est une cellule vide, ou une cellule usager, ou une cellule non usager (typiquement une cellule de maintenance). Le troisième mot M3 contient 16 bits de parité BIP16 calculé sur les données contenues dans la cellule. Le message ainsi formé est transmis au circuit de traitement 201 pour être mémorisé dans une mémoire tampon 203.

Selon un exemple préféré de réalisation, dans le cas où la cellule reçue est une cellule vide ou une cellule usager, on passe par la mémoire de traduction 102. Cette mémoire permet, comme cela a été décrit, d'obtenir un mot M1 de taille réduite par rapport à la taille de l'information qu'il faudrait traiter puisque en l'absence de ce codage on aurait 32 bits (VPI + VCI) par cellule.

Dans le cas où la cellule à insérer est une cellule de maintenance telle que définie pour le flux F4 dans la norme ATM, le mot M1 est formé directement sans passage par la mémoire de traduction, il s'agit de l'indicateur de conduit virtuel VPI de la cellule.

Selon le procédé conforme à l'invention, on mémorise ces messages dans une mémoire tampon le temps du traitement des cellules placées précédemment dans la mémoire tampon. Cette mémoire est du type FIFO. Les messages sont lus successivement pour être traités par le circuit 201.

A l'initialisation, on attend que la mémoire tampon 203 comporte un nombre prédéterminé M de messages. Ceci introduit un retard de M cellules sur le flux réel, cependant ce retard est suffisamment faible pour ne pas être contraignant.

Les messages ainsi mémorisés sont lus les uns à la suite des autres dès que le nombre M est atteint. Lorsqu'un message ME d'une cellule usager est lu, le message de la cellule X+1 est mémorisé. La mémoire contient dans ce cas toujours M messages.

Par la lecture d'un message ME relatif à une cellule X, on connaît le contenu du mot M2 qui donne l'état de la cellule et on peut ainsi effectuer le traitement qu'il convient.

Tant qu'aucune cellule caractéristique n'est à insérer, c'est à dire tant que l'on n'a pas émis au moins X cellules du même conduit virtuel en sortie du circuit 202, on continue à lire les messages de la mémoire tampon 203 et à émettre les cellules lues dans le tampon 103.

Lorsque le message lu représente la X^{ième} cellule usager, on indique au circuit 202 de lire la FIFO 103 puis on génère une cellule caractéristique et on attend un message S3. Au premier des messages suivants représentant une cellule vide, on n'émet pas cette cellule et on lit le message suivant sans attendre qu'un message correspondant à une nouvelle cellule arrive.

On a ainsi compensé l'insertion de la cellule caractéristique par la suppression d'une cellule vide; le débit du VP considéré est donc conservé.

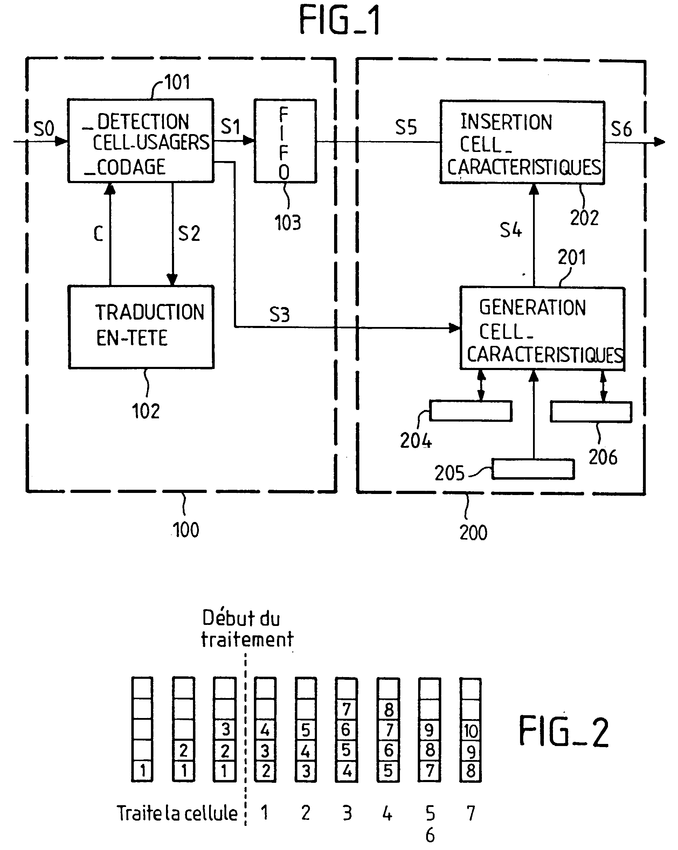

On va se reporter maintenant pour mieux comprendre au schéma de la figure 2.

Cette figure représente les mouvements des messages formés par les cellules dans la pile 203.

Supposons que la pile soit initialisée avec M=3 messages. Cela signifie qu'il n'y a aucun traitement pendant l'arrivée de ces trois premiers messages. Le traitement commence par le message de la cellule 1. Supposons qu'il s'agit d'une cellule vide.

Alors le circuit 201 transmet au circuit 202 une indication lui précisant de reconstituer la cellule vide et l'émettre. Ce circuit 201 attend le message de la cellule suivante (la cellule 14).

Ce circuit 202 traite ensuite le message de la cellule 2 qui est par exemple une cellule usager et attend le message de la prochaine cellule (la cellule 4).

Supposons que la cellule à traiter (la cellule 3) soit la X^{ième} alors, il faut émettre cette cellule puis émettre une cellule caractéristique donc, pendant ce temps il arrive deux cellules, les cellules 6 et 7, dont les messages sont placés en haut de la pile. A ce moment, la pile contient donc M+1=4 messages et le compteur de cellules insérées est égal à 0+1=1. Le circuit traite ensuite le message de la cellule 4 qui est une cellule usager et attend le message de la cellule 8.

Le message de la cellule 5 indique qu'il s'agit d'une cellule vide et le compteur de cellules insérées est non nul, alors cette cellule est à supprimer, elle n'est pas émise et le circuit traite le message de la cellule 6 suivante sans attendre que le message de la cellule suivante arrive. La pile contient alors M+1-1=M messages et le compteur de cellules insérées est égal à 1-1=0.

Ensuite, le circuit attend le message de la cellule 9 suivante. Deux cellules ont donc été traitées pendant un "temps cellule".

Le message de la cellule 7 indique qu'il s'agit d'une cellule vide et le compteur est nul, alors on émet cette cellule et le circuit attend le message suivant, c'est à dire le message de la cellule 10 et ainsi de suite.

Dans cet exemple, on a choisi d'émettre une cellule caractéristique juste après la X^{ième} cellule du flux. Bien évidemment, cette insertion peut être différée en sauvegardant les éléments nécessaires à la formation de la cellule caractéristique et en comptant ces cellules pour les insérer au moment voulu tout en le faisant en supprimant une cellule vide conformément à l'invention.

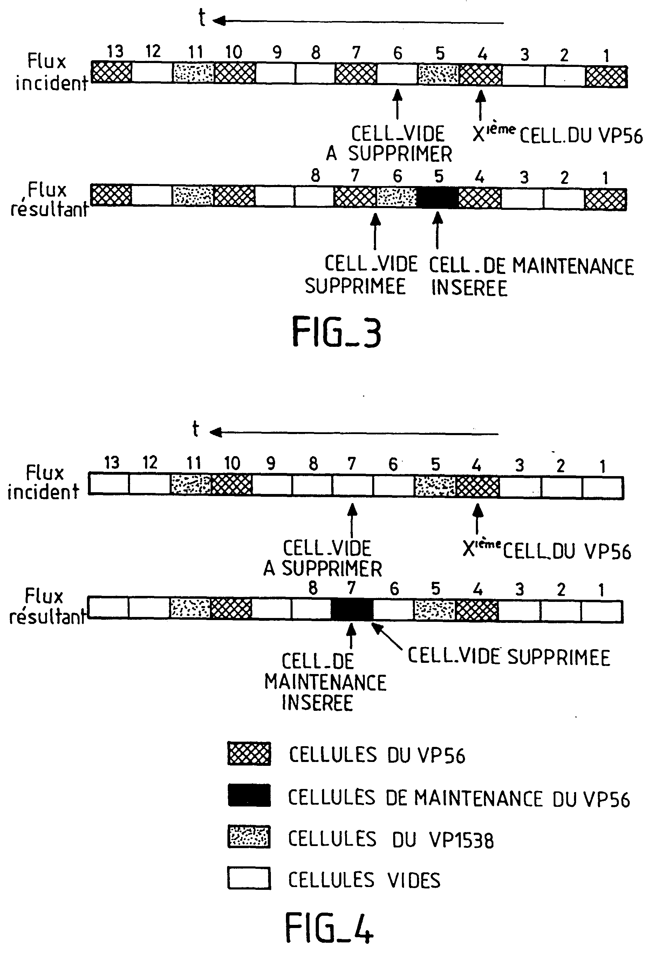

On pourra se reporter pour ce qui suit aux schémas des figures 3 et 4.

La figure 3 illustre, de façon schématique sur la première ligne, un flux incident dans lequel on a numéroté les cellules de 1 à 13 et dans lequel on a fait apparaître de façon distincte les différents types de cellules selon la légende indiquée. La deuxième ligne représente le flux résultant, après insertion d'une cellule de maintenance et suppression d'une cellule vide à l'emplacement indiqué, c'est à dire après la X^{ième} cellule du même conduit virtuel VP56 (par exemple).

La figure 4, illustre une deuxième variante de réalisation. Selon cette variante, on introduit dans le flux incident représenté sur la première ligne, une cellule de maintenance de manière à ce qu'elle se trouve au milieu de deux cellules du même conduit VP56, la première étant la X^{ième} cellule de ce VP56.

Le milieu entre deux cellules d'un même conduit est défini par la distance qui les sépare dans le temps, c'est à dire le débit. Cette distance est aisément mesurable puisqu'il s'agit de mesurer le débit et de diviser par deux pour connaître l'emplacement de la cellule à insérer.

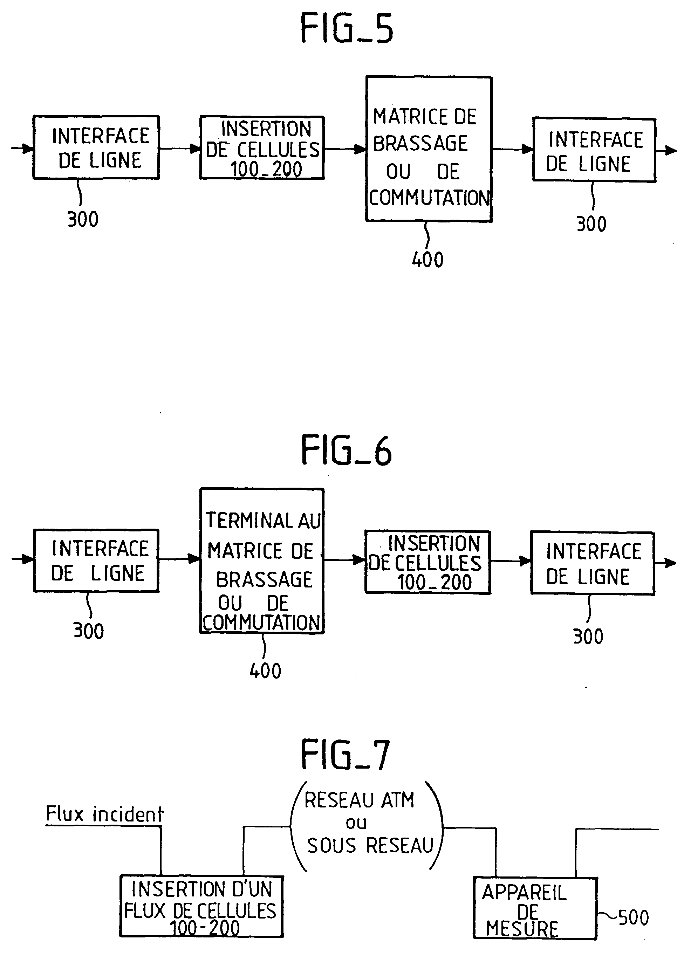

Les schémas des figures 5, 6 et 7, illustrent trois implantations possibles du dispositif qui vient d'être décrit.

Les figures 5 et 6, correspondent aux cas où l'insertion des cellules se fait dans un équipement ATM.

En effet, il est possible d'implanter ce dispositif dans un brasseur ou dans un commutateur 400 en plaçant ce dispositif en amont du brasseur ou du commutateur tel que représenté sur la figure 5.

L'interface 300, représente l'adaptation entre le niveau ATM et le niveau physique.

En outre, ce dispositif peut être aussi implanté sur un terminal de réseau, et dans ce cas il sera placé en sortie du terminal tel que représenté sur la figure 6.

La figure 7, corrrespond au cas où l'insertion est faite en dehors d'un équipement ATM.

Dans ce cas, le dispositif est placé sur la ligne du réseau. Il reçoit le flux transporté par cette ligne et émet sur la ligne du réseau le flux après insertion des cellules (de maintenance). Dans ce cas, on prévoit un appareil de mesure 500 en réception pour effectuer des mesures de qualité du réseau.

A titre d'exemple, le dispositif a été réalisé de la manière suivante :
- pour les circuits 101 et 202 : on a utilisé des circuits à logique programmable XILINX,
- pour le circuit 201 : on a utilisé un processeur rapide du type DSP qui permet d'effectuer des traitements en temps réel (temps cellule). Avec des processeurs rapides du type DSP, on peut insérer un flux F4 ou F5 ainsi qu'un flux spécifique à n'importe quel débit.

## Revendications

1. Procédé d'insertion d'un flux de cellules caractéristiques dans un flux de cellules incident conforme à la norme ATM ou analogue quelque soit son débit, le flux comprenant notamment des cellules usagers et des cellules vides, caractérisé en ce qu'il comporte les étapes suivantes :
- effectuer un pré-traitement en temps réel sur le flux entrant pour d'une part, former un message caractérisant chaque cellule reçue et donnant notamment une information sur le type de cellule et d'autre part, sélectionner les cellules usagers et les stocker chacune le temps du traitement qui va suivre,
- effectuer un traitement en temps réel à partir des messages formés pour générer une cellule caractéristique, l'émettre à chaque fois qu'un nombre déterminé de cellules usagers a été émis et comptabiliser les cellules caractéristiques émises pour supprimer un nombre de cellules vides correspondant, sinon émettre une cellule usager en attente ou générer une cellule vide.

2. Procédé d'insertion d'un flux de cellules selon la revendication 1, caractérisé en ce que l'insertion d'une cellule caractéristique sur un conduit virtuel est faite juste après l'apparition de la X^{ième} cellule du flux et, la suppression de la cellule vide a lieu dès l'apparition d'une cellule vide sur le flux après cette insertion ou pendant.

3. Procédé d'insertion d'un flux de cellules selon la revendication 1, caractérisé en ce que l'insertion d'une cellule caractéristique sur un conduit virtuel est faite à tout moment dans l'intervalle de temps qui sépare la X^{ième} cellule du conduit et la (X+1)^{ième}, et en ce qu'en l'absence de cellule vide à supprimer, leur nombre est comptabilisé.

4. Procédé d'insertion d'un flux de cellules selon l'une quelconque des revendications précédentes, caractérisé en ce que les cellules insérées sont des cellules de maintenance de supervision de qualité (F4 ou F5).

5. Procédé d'insertion d'un flux de cellules selon l'une quelconque des revendications précédentes, caractérisé en ce que les cellules insérées sont des cellules d'un flux spécifique défini pour une application particulière.

6. Dispositif d'insertion d'un flux de cellules caractéristiques dans un flux de cellules incident conforme à la norme ATM ou analogue quelque soit son débit, le flux comprenant notamment des cellules usagers et des cellules vides, selon l'une quelconque des revendications précédentes, caractérisé en ce qu'il comporte :
- des moyens de pré-traitement en temps réel (100) permettant de former un message pour chaque cellule entrante, ces moyens permettant en outre de détecter les cellules usagers pour les stocker,
- des moyens de traitement en temps réel (200) permettant de compter les cellules usagers, de générer les cellules caractéristiques à partir des messages formés, d'émettre une cellule caractéristique après l'émission de X cellules usagers, de comptabiliser les cellules caractéristiques émises et de supprimer une cellule vide.

7. Dispositif d'insertion d'un flux de cellules selon la revendication 6, caractérisé en ce que les moyens de pré-traitement (100) comportent des moyens de détection (101) de cellules usagers, une mémoire de traduction (102) et une mémoire tampon (103).

8. Dispositif d'insertion d'un flux de cellules selon la revendication 6, caractérisé en ce que les moyens de traitement (200) comportent des moyens de génération de cellules caractéristiques (201), une mémoire tampon (203) et des moyens d'insertion (202) des cellules générées dans le flux de sortie.

## Patentansprüche

1. Verfahren zur Einfügung eines Stroms charakteristischer Zellen in einen eintreffenden, der ATS-Norm oder einer analogen Norm entsprechenden Zellenstrom von beliebiger Datenübertragungsgeschwindigkeit, wobei der Strom insbesondere Benutzerzellen und Leerzellen enthält,
**dadurch gekennzeichnet,** daß es die folgenden Schritte umfaßt:
- einerseits Durchführen einer Echtzeit-Vorverarbeitung des eintreffenden Stroms,
andererseits Bilden einer jede empfangene Zelle charakterisierenden und insbesondere eine Information über den Zellentyp liefernden charakteristischen Nachricht,
Auswählen der Benutzerzellen und Abspeichern von jeder von ihnen während der nachfolgenden Verarbeitungszeit,
- Durchführen einer Echzeitverarbeitung aufgrund gebildeter Nachrichten, um eine charakteristische Zelle zu erzeugen und sie jedesmal dann zu senden, wenn eine bestimmte Benutzerzellenzahl gesendet wurde, und die gesendeten charakteristischen Zellen zu verbuchen, um eine entsprechende Leerzellenzahl zu beseitigen, andernfalls Senden einer wartenden Benutzerzelle oder Senden einer Leerzelle.

2. Verfahren zum Einfügen eines Zellenstroms nach Anspruch 1, dadurch gekennzeichnet, daß das Einfügen einer charakteristischen Zelle in eine virtuelle Leitung direkt nach Erscheinen der X^{ten} Zelle des Flusses erfolgt und die Beseitung der Leerzelle gleich mit dem Erscheinen einer Leerzelle in dem Strom nach oder während dieser Einfügung stattfindet.

3. Verfahren zum Einfügen eines Zellenstroms nach Anspruch 1, dadurch gekennzeichnet, daß das Einfügen einer charakteristischen Zelle in eine virtuelle Leitung zu jedem Zeitpunkt innerhalb des Zeitintervalls erfolgt, das die X^{te} und die (X+1)^{te} Zelle der Leitung trennt, und dadurch, daß bei Fehlen einer zu beseitigenden Leerzelle ihre Zahl verbucht wird.

4. Verfahren zum Einfügen eines Zellenstroms nach einem der vorangehenden Ansprüche, dadurch gekennzeichnet, daß die eingefügten Zellen Qualitätaufrechterhaltungs-Überwachungszellen (F4 oder F5) sind.

5. Verfahren zum Einfügen eines Zellenstroms nach einem der vorangehenden Ansprüche, dadurch gekennzeichnet, daß die eingefügten Zellen Zellen eines spezifischen Stroms sind, definiert für eine Sonderanwendung.

6. Anlage zum Einfügen eines Stroms charakteristischer Zellen in einen eintreffenden, der ATS-Norm oder einer analogen Norm entsprechenden Zellenstrom von beliebiger Datenübertragungsgeschwindigkeit, wobei der Strom insbesondere Benutzerzellen und Leerzellen entsprechend einem der vorangehenden Ansprüche enthält,
**dadurch gekennzeichnet,** daß sie umfaßt:
- Echtzeit-Vorverarbeitungseinrichtungen (100), die ermöglichen, eine Nachricht für jede eintreffende Zelle zu bilden, wobei diese Einrichtungen außerdem ermöglichen, die Benutzerzellen zu detektieren, um sie zu speichern,
- Echtzeit-Verarbeitungseinrichtungen (200), um die Benutzerzellen zu zählen, die charakteristischen Zellen aufgrund der gebildeten Nachrichten zu erzeugen, nach dem Senden von X Benutzerzellen eine charakteristische Zelle zu senden, die gesendeten charakteristischen Zellen zu verbuchen und eine Leerzelle zu beseitigen.

7. Anlage zum Einfügen eines Zellenstroms nach Anspruch 6, dadurch gekennzeichnet, daß die Vorverarbeitungseinrichtungen (100) Benutzerzellen-Detektionseinrichtungen (101), einen Übersetzungsspeicher (102) und einen Pufferspeicher (103) umfassen.

8. Anlage zum Einfügen eines Zellenstroms nach Anspruch 6, dadurch gekennzeichnet, daß die Verarbeitungseinrichtungen (200) Einrichtungen (201) zur Erzeugung charakteristischer Zellen (201), einen Pufferspeicher (203) und Einfügungseinrichtungen (202) der erzeugten Zellen in den Ausgangsstrom umfassen.

## Claims

1. A method of inserting a flow of characteristic cells into a flow of incident cells complying with the ATM or similar standard irrespective of its speed, the flow consisting in particular of user cells and empty cells, characterised in that it comprises the following steps:
- the incoming flow is pre-processed in real time in order, on the one hand, to formulate a message characterising each cell received and indicating a specific piece of information about the cell type, and, on the other, to select the user cells and store each of them for the processing time about to ensue,
- real-time processing on the basis of the formulated messages in order to generate a characteristic cell, transmit it every time a given number of user cells has been transmitted and keep an account of the characteristic cells transmitted in order to delete a corresponding number of empty cells, or otherwise transmit a stand-by user cell or generate an empty cell.

2. A method of inserting a flow of cells as claimed in claim 1, characterised in that a characteristic cell is inserted on a virtual path immediately after the appearance of the Xth cell in the flow and the empty cell is deleted as soon as an empty cell appears on the flow after or during this insertion.

3. A method of inserting a flow of cells as claimed in claim 1, characterised in that a characteristic cell is inserted on a virtual path at any time during the period between the Xth cell of the path and the (X+1)th and, if there is no empty cell to be deleted, an account is kept of their number.

4. A method of inserting a flow of cells as claimed in any one of the preceding claims, characterised in that the inserted cells are quality supervision management cells (F4 or F5).

5. A method of inserting a flow of cells as claimed in any one of the preceding claims, characterised in that the inserted cells are the cells of a specific flow defined for a particular application.

6. A device for inserting a flow of characteristic cells into a flow of incident cells complying with the ATM or similar standard irrespective of its speed, the flow comprising user cells and empty cells in particular, as claimed in anyone of the preceding claims, characterised in that it has:
- real-time pre-processing means (100) enabling a message to be formulated for each incoming cell, these means additionally enabling user cells to be detected so that they can be stored,
- real-time processing means (200) enabling the user cells to be counted, characteristic cells to be generated from the formulated messages, a characteristic cell to be transmitted after X user cells have been transmitted, keep an account of the characteristic cells transmitted and delete an empty cell.

7. A device for inserting a flow of cells as claimed in claim 6, characterised in that the pre-processing means (100) have means for detecting (101) user cells, a translation memory (102) and a buffer memory (103).

8. A device for inserting a flow of cells as claimed in claim 6, characterised in that the processing means (200) have means for generating characteristic cells (201), a buffer memory (203) and means for inserting (202) the generated cells in the outgoing flow.
